# EUROPEAN PATENT SPECIFICATION

(11) **EP 2 409 612 B1**
(45) Date of publication and mention of the grant of the patent: **16.01.2013**
(21) Application number: 11171981.1
(22) Date of filing: 29.06.2011
(51) Int. Cl.: A47J 31/44, G01F 23/16

(54) **Process for detecting the quantity of liquid present within a container and apparatus for carrying out the process**
Verfahren zur Erkennung der in einem Behälter vorhandenen Flüssigkeitsmenge und Vorrichtung zur Durchführung des Prozesses
Procédé pour détecter la quantité de liquide présent dans un récipient et appareil pour réaliser le procédé

(30) Priority: 22.07.2010 EP 10425247
(43) Date of publication of application: 25.01.2012
(73) Proprietor: Gruppo Cimbali S.p.A., 20082 Binasco (MI) (IT)
(72) Inventor: Erba, Roberto, 20082 Binasco MI (IT); Ceccaroli, Stefano, 20082 Binasco (IT)
(74) Representative: Acco, Stefania

(56) References cited:
- EP-A2- 0 886 129
- GB-A- 2 391 630
- US-A1- 2004 011 127
- US-A1- 2006 288 776

## Description

This invention relates to a process for detecting the quantity of liquid present within a container provided with a conduit for delivery of the liquid, said conduit having an open extremity immersed in the liquid positioned close to the base of the container and an opposite extremity connected to a device using the liquid, which is open to the environment outside the container, in which the liquid is drawn from the container through a pump located in the said delivery conduit and controlled by means of a control unit.

The invention also relates to an apparatus for implementing the process.

A method for determining the current filling level of a liquid in a container is described in US 2004/0011127 where an immersion pipe is dipped into the liquid in the container to be filled or drained. The disclosed method is said to be used with analysers in medical technology.

The development of automation in the sector of equipment for hotels, restaurants and cafes has provided operators in the sector with increasingly versatile machines for the automatic production of beverages which in the past were only obtained in good quality through handling by expert operators. One example of these are apparatuses for the frothing of milk, which in combination with equipment for the production of espresso coffee, and distributors for syrup, flavourings, or soluble or liquid chocolate make it possible to provide the sector with machines capable of delivering a variety of both hot and cold drinks.

The automatic nature of these apparatuses requires that the ingredients required to prepare the beverages have to be stored within them, and that, for a correct operation, the process of delivery is prevented when the store of an ingredient falls below a critical level, and at the same time an indication is provided to the operator that the ingredient which has become exhausted needs to be topped up.

Photocell devices, devices of the resistance or capacitance types or devices which are sensitive to weight, such as for example described in EP 2 011 421 A1, are widely used for this purpose.

However, these known arrangements require a storage system specifically designed for use with the type of detector selected. Detection by means of a photocell, whether of the optical frequency or infrared type, makes it necessary to design the ingredient container with materials that are transparent to the radiation from the emitter/receiver system, while a system having electrodes immersed in a container for liquids requires arrangements to prevent them from being damaged in the course of the inevitable cleaning and sterilising operations.

In addition to this, the flow of current characteristic of devices having electrodes is not always compatible with conservation of the quality of the liquid being measured. Of the basic ingredients used in machines of the abovementioned type milk is undoubtedly the most difficult, to the extent that the foodstuffs regulations specify that storage spaces are to be held at specific temperatures, thus placing a further constraint on designers' freedom.

Perhaps the most widely used packs for the packaging, transport and storage of milk and other ingredients such as, for example, liquid chocolate, are the containers made of laminated material known by the trade name "Tetrapak", which ensure that products are preserved extremely well from production to final use.

For delivery of the liquid, a flexible tube through which the liquid is drawn up by a pump which delivers it to a user device, for example a frothing device, if the liquid drawn up is milk, is inserted into the tetrapak through a small incision made in one of the corners. To reduce possible contamination of the liquid by external agents the incision made in the container wall is as small as possible. If the liquid, for example milk, is not completely used up, it can be placed back in the refrigerator and all that is necessary is to wash the flexible suction tube. This type of use simplifies sterilising and cleaning operations even in professional devices having an incorporated refrigerated space of the type described in US 5 207 148, or alongside as described in EP 1 901 015 A2; in the USA, for example, it is common to use one gallon tetrapak containers.

In all cases where the automatic machine producing beverages requires the level of ingredients to be checked, it is not possible to use the packaging directly, because for example it cannot be penetrated by optical or infrared radiation.

As a consequence, the ingredient must be transferred into a specific container with which the machine is provided, making the operations necessary for maintaining proper hygiene more onerous. Furthermore, because the use-by date of products are stamped on tetrapak containers, transfer of the liquid brings about the risk that trace of a product's use-by date will be lost.

An object of this invention is to determine the quantity of liquid by checking the level directly within the container without to the need of performing any operation on the container other than inserting the dip pipe for drawing up the product.

Another object of this invention is to provide a process for measuring and checking the level of liquids stored within containers serving a machine producing beverages, using components which are always at present in the circuits of these machines, such as for example pumps.

The process according to the invention allows to automatically detect also simple but vexatious errors such as incorrect insertion of the dip pipe into the container or tetrapak.

In an aspect, the present invention relates to a process of checking for the presence of a liquid within a container, the process being provided with a container having a bottom and with a delivery conduit for delivery of the liquid, said conduit having an open extremity immersed in the liquid located close to the bottom of the container and an opposite extremity connected to a user device using the liquid, which is open to the environment outside the container, wherein the liquid is drawn out of the container by means of a pump located in said delivery conduit and controlled via a control unit to which it is connected, wherein the process comprises:
stopping the pump thereby closing the delivery conduit at the pump;
drawing air from the environment outside the container by delivering it therein for a sufficient time to fill with air a length of conduit extending between the pump and the open extremity of the conduit immersed in the liquid;
measuring the static pressure established within said length of conduit, and
processing the static pressure detected in the conduit in order to provide an indication of the corresponding piezometric head of the liquid present in the container. Preferably, the pump is a reversible pump. In some preferred embodiments, after drawing in air to fill a length of the delivery conduit and before measuring the static pressure, the process comprises stopping the pump thereby closing the delivery conduit at the pump.

Preferably the process comprises, before drawing in air from the environment outside the container, a step in which the liquid possibly present in the conduit is caused to flow back into the container.

Preferably, the liquid within the container is milk.

In some preferred embodiments, the pump is a reversible pump and drawing air from the environment outside the container for a sufficient time to fill with air the length of conduit comprises driving the reversible pump for a sufficient time to fill with air the length of the conduit.

Preferably, the process is a process of checking the quantity of a liquid stored within a container and processing the measured static pressure comprises determining the quantity of the liquid from the indication of the piezometric head. In some embodiments, the process further comprises, after processing the measured static pressure, controlling if the quantity of liquid is sufficient to allow at least one beverage to be delivered, and, in the affirmative, activating the reversible pump so that the pump drives with a direction of rotation reversed with respect to the direction of rotation causing the back flow of the liquid into the container.

Preferably, the extremity open to the environment outside the container is connected through the user device to a delivery opening for dispensing the liquid.

In another aspect, the present invention is directed to an apparatus implementing the process according to the main features of the invention and comprising a container with a liquid for use with a user device which is open to the environment outside the container, a delivery conduit connecting said container to said user device, said delivery conduit having one open extremity immersed in the liquid located close to the bottom of the container and its opposite extremity connected to the said device using the liquid, a pump located in the said delivery conduit, a control unit to control the operation of the pump to which it is connected, wherein the apparatus includes a pressure measuring device in the conduit located in the length thereof between the open extremity immersed in the liquid in the container and said pump, said measuring device being connected to the said control unit to send the pressure values measured to the latter and the control unit being programmed to convert the said pressure values into a value for the height of the liquid present in the container.

Preferably, the pump is a reversible pump. In some embodiments, the pump is a peristaltic pump. In some preferred embodiments, the open extremity of the conduit, which is immersed in the liquid, is positioned at a predetermined distance D from the bottom of the container, the dimensional characteristics of the shape of which are known.

Preferably, the distance D at which the open extremity of the length of conduit is positioned with respect to the bottom of the container corresponds to a height of liquid in the container which, depending upon the dimensions and shape of the latter, determines a quantity which enables the user device to deliver at least one final dose of beverage containing the liquid in question. Preferably, the apparatus comprises a refrigerated chamber in which said container is housed. Preferably, the container is of the type comprising laminate material which can be perforated in a part thereof to permit the open extremity of the delivery conduit to be inserted.

In a preferred embodiment, an apparatus for checking the height of a liquid within a container comprises: a container with a liquid for use with a user device, the user device being open to the environment outside the container, the container having a bottom; a delivery conduit connecting said container to said user device, said delivery conduit having an open extremity immersed in the liquid and located close to the bottom of the container and an opposite extremity connected to the said user device and being open to the external environment; a reversible pump located in the delivery conduit so as to define a length of the conduit extending between the pump and the open extremity immersed in the liquid, and a control unit to control the operation of the pump to which it is connected, wherein the apparatus includes a pressure measuring device located in the length of the conduit extending between the open extremity immersed in the liquid and said pump, said measuring device being connected to the said control unit to send the pressure values measured to the latter, wherein the control unit is apt to control the driving of the reversible pump in two directions of rotation, a first direction to draw out the liquid from the container and a second direction to eject the liquid possibly present in the length of the duct into the container and to draw in air from the external environment, the control unit being programmed to drive the pump in the second direction, to stop the pump when the length of the conduit is filled with air, to receive a pressure value from the pressure measuring device and to calculate from the received pressure value a value of height of the liquid present in the container. Preferably, the apparatus is a machine dispensing beverages.

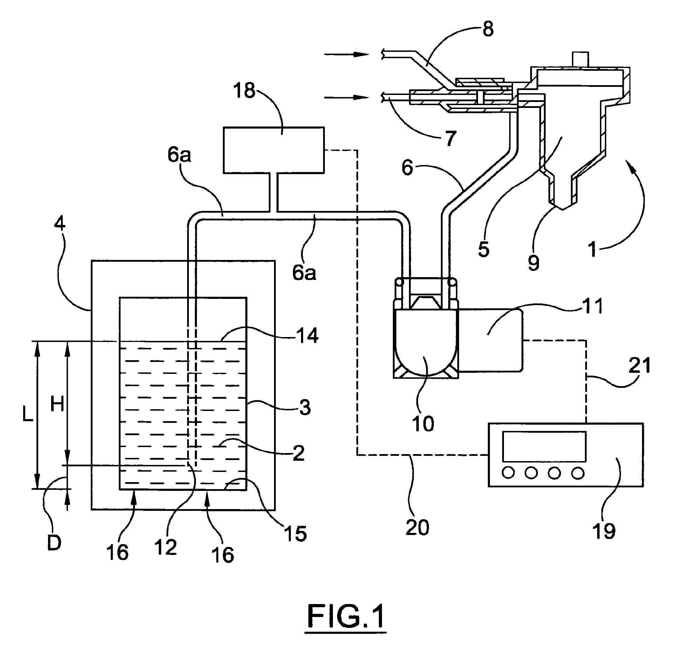

The invention will now be more particularly described with reference to equipment suitable for implementing the process, illustrated by way of indication and without limitation in Figure 1 of the appended drawings.

With reference to the said figure, 1 diagrammatically illustrates a device using a liquid 2 present in a container 3 placed in a refrigerator compartment 4.

In particular, the device shown in Figure 1 is a machine for dispensing beverages. Preferably, the device is a machine apt to dispense milk-based beverages.

In particular, liquid 2 is milk and user device 1 comprises a device for heating and if desired frothing the milk. Conventionally, such a device comprises a chamber 5 into which the milk flows through a delivery conduit 6, the heating steam flows through a conduit 7 and compressed air flows through a conduit 8 for frothing, if desired.

Chamber 5 has a delivery opening 9, from which the beverage is delivered.

A pump 10, preferably a reversible pump, driven by a motor 11 is inserted in conduit 6. Preferably pump 10 is of the peristaltic type.

The delivery conduit 6 extends to a refrigerated compartment 4 through a length 6a of the conduit, the open extremity 12 of which is inserted into a container 3 through an opening 13 made in a wall 14 of the container.

Through the delivery opening 9 of the user device 1, the delivery conduit 6 is connected to the external environment, i.e. environment outside the container, by means of an extremity opposite to the open extremity 12 inserted in the container 3. The extremity opposite to the open extremity 12 is connected through the user device 1 to the delivery opening 9 for dispensing the liquid.

The open extremity 12 of length 6a of conduit 6 is located close to the bottom 15 of container 3 at a preset distance D therefrom. Refrigerator compartment 4 is provided with a reference plane comprising, for example, supports 16 to ensure that container 3 is correctly positioned and therefore also to assist positioning of extremity 12 of conduit 6 relative to the base of container 3.

Container 3 is preferably made of laminate material, a part of which can be perforated to allow insertion of the open extremity 12 of said delivery conduit 6.

Preferably container 3 is a known packaging having the trade name "Tetrapak" and conduit 6 comprises a flexible pipe made of conventional plastics material suitable for contact with food products.

The distance D remains unchanged although the shape and radial dimensions of container 3 will change while the height H between open extremity 12 and the free surface 17 of the liquid present in container 3 varies according to the quantity of liquid present, which determines the height L from the free surface to the bottom 15.

Preferably, distance D at which open extremity 12 of conduit 6 is positioned with respect to bottom 15 of container 3 corresponds to a height of liquid in the container which, depending upon the dimensions and shape of the latter, determines a quantity which enables user device 1 to deliver at least one final dose of beverage including the liquid in question.

According to some preferred embodiments of the invention, a pressure measuring device 18, the signal from which, of the electrical or electronic type, is sent to a control unit 19 through a connection 20, is located in length of conduit 6a.

Control unit 19 controls motor 11 driving pump 10 through a connection 21.

With the apparatus described above it is possible to perform a process of detecting the quantity of liquid 2 present in container 3 providing correct information to control unit 19, on which the control governing whether user device 1 can or cannot be operated according to the liquid actually present in container 3 depends.

According to the invention, before the device using the liquid is operated, for example before starting up device 1 to heat and possibly froth milk, pump 10 is driven in the direction of rotation which causes the liquid possibly present in conduit 6 to flow back into container 3 and subsequently to pass air into length of conduit 6a towards open extremity 12 immersed in liquid 2.

Pump 10 is driven by motor 11 for a sufficient time to fill this length of conduit 6a with air, this time being determined by calibration of the devices designed for this function present in control unit 19 according to type of container 3. The condition that the length of conduit 6a between pump 10 and open extremity 12 has been filled can be established by observing air bubbles bubbling in liquid 2 when calibrating unit 19, carried out using a test container whose structure makes it possible to observe its interior.

Once the length of conduit 6a is full of air, pump 10 is stopped, with consequent closing of the conduit at the pump.

At this point, the static pressure of air in the length of conduit 6a is measured by means of pressure measuring device 18. From the value of this and knowing the density of the liquid, the piezometric head H of the liquid, and therefore the total height L = H + D, is calculated. Knowing the parameters relating to the shape of container 3, level L of liquid present in container 3 can be expressed as a function of the static pressure measured within the length of conduit 6a by measuring device 18 when calibrating the equipment, and the corresponding value can be transmitted to control unit 19 in electrical or electronic terms.

If the quantity of liquid present in container 3 is sufficient to allow at least one beverage to be delivered, control unit 19 is able to activate motor 11 through connection 21 so that pump 10 reverses its direction of rotation and draws liquid out from the container 3 and delivers it to user device 1.

In some embodiments, pump 10 is a reversible pump apt to be driven in a first and a second direction of rotation, wherein the first direction of rotation causes the liquid to be drawn out from the container. When operating in the first direction of rotation, the pump 10 acts as a suction pump for the liquid, e.g. milk, to be conveyed to the user device. The user device can heat and/or froth the liquid received from the container, so as to prepare a beverage to be dispensed through the delivery opening 9.

Driving the reversible pump in the second direction of rotation, opposite to the first direction of rotation, causes the ejection of any possible liquid present in the length. As an extremity of the conduit 6 is open to the external environment, when the length 6a of the conduit is emptied of liquid, driving of pump 10 causes air to be drawn into the delivery conduit. Driving the pump in the second direction of rotation is carried out for a time sufficient to fill the length 6a of the conduit with air.

For reversal of the direction of rotation, the reversible pump 10, i.e. the motor 11 of the reversible pump, is stopped to allow the reversal of direction and, during pump halting, the conduit is closed at the pump.

The condition that the length 6a of conduit has been filled with air, which can be established during calibration of the device, is stored in the control unit 19. For example, a filling time necessary for the appearance of bubbles is stored in the control unit.

In an embodiment, the control unit 19 drives the pump 10 until the condition of having length 6a filled with air is achieved (e.g. 19 drives the pump for a time equal to the filling time). After this condition is achieved, the pump is stopped thereby acting as a shut-off valve sealing off the length of the conduit from the external environment.

Subsequently, the pressure measuring device 18 measures the static pressure within the length of conduit extending from the pump to the open extremity 12 immersed in the liquid and from the measured value of the static pressure the height of the liquid is derived. By knowing the geometry and the dimensions of the container, the quantity of liquid contained in the container can be calculated from the height L of the liquid. In some embodiments, the calculation of the quantity of liquid is performed by the control unit that stores an algorithm that uses as input data the measured pressure, the density of the liquid and the geometrical parameters of the container.

In some other embodiments, emptying the length of conduit 6a of any possible liquid and drawing air into the same can be performed by an additional pump (not shown in the figure), connected with the length 6a of the delivery conduit, the pump being apt to blow air into the length 6a. In that case, the pump 10 can be stopped before the additional pump (e.g. of conventional type) carries out the step of drawing in air into the length 6a of the conduit, possibly after having emptied the conduit of any liquid. In those embodiments, pump 10 needs not to be a reversible pump. For example, pump 10 is a conventional suction pump that draws the liquid out from the container and delivers it to the user device. When checking of the height of the liquid in the container is to be performed, pump 10 is stopped, thereby closing the conduit 6 at the pump. Then, the additional pump is driven to blow air into the length 6a of the conduit. The additional pump is preferably located to an air conduit (not shown) connected to the length 6a of the delivery conduit. Air can be drawn in by the additional pump by means of an air inlet (not shown) placed upstream the additional pump.

After the step of drawing air from the external environment to fill the length 6a of the conduit, the additional pump is stopped. Then, the measurement of the static pressure in the length 6a is carried out.

Dimensions and materials may obviously be of any kind according to requirements without thereby going beyond the scope of the invention as described above and claimed below.

## Claims

1. A process of checking for the presence of a liquid (2) within a container , the process being provided with a container (3) having a bottom (15) and with a conduit (6, 6a) for delivery of the liquid, said conduit (6, 6a) having an open extremity (12) immersed in the liquid (2) located close to the bottom (15) of the container (3) and an opposite extremity which is open to the environment outside the container (3), wherein the liquid (2) is drawn out of the container (3) by means of a pump (10) located in said delivery conduit (6, 6a) and controlled via a control unit (19) to which it is connected, **characterised in that** the extremity open to the environment outside the container is connected to a user device (1) using the liquid and through the user device to a delivery opening (9) for dispensing the liquid and **in that** the method comprises:
stopping the pump thereby closing the delivery conduit at the pump;
drawing air from the environment outside the container by delivering it therein for a sufficient time to fill with air a length of conduit (6a) extending between the pump (10) and the open extremity (12) of the conduit immersed in the liquid (2);
measuring the static pressure established within said length of conduit (6a), and
processing the static pressure detected in the conduit in order to provide an indication of the corresponding piezometric head (H) of the liquid (2) present in the container (3).

2. The process according to claim 1, wherein, before drawing in air from the environment outside the container (3), a step is performed in which the liquid (2) possibly present in the conduit (6, 6a) is caused to flow back into the container (3).

3. The process according to claim 1, wherein the liquid within the container (3) is milk.

4. The process of claim 1, wherein the pump (10) is a reversible pump.

5. The process of claim 4, wherein drawing air from the environment outside the container for a sufficient time to fill with air the length of conduit (6a) comprises driving the reversible pump for a sufficient time to fill with air the length of the conduit.

6. The process of claims 4 or 5, further comprising, after drawing air from the environment so as to fill the length of the conduit and before measuring the static pressure, stopping the pump thereby closing the delivery conduit at the pump.

7. The process of anyone of claims from 1 to 3, wherein drawing air from the environment so as to fill the length of the conduit is carried out by an additional pump connected to the length of the conduit (6a).

8. The process of claim 7, further comprising, after drawing air from the environment so as to fill the length of the conduit and before measuring the static pressure, stopping the additional pump.

9. The process of anyone of claims from 1 to 8, wherein the process is a process of checking the quantity of a liquid stored within a container and processing the measured static pressure comprises determining the quantity of the liquid from the indication of the piezometric head (H).

10. An apparatus, the apparatus being a machine for dispensing beverages and comprising a container (3) with a liquid (2) for use with a user device (1) which is open to the environment outside the container (3), a delivery conduit (6, 6a) connecting said container (3) to said device (1) using the liquid, said conduit (6, 6a) having one open extremity (12) immersed in the liquid (2) located close to the bottom (15) of the container (3) and its opposite extremity connected to the said device (1) using the liquid, a pump (10) located in the said delivery conduit (6), a control unit (19) to control the operation of the pump (10) to which it is connected, wherein the apparatus includes a pressure measuring device (18) in the conduit located in the length (6a) thereof between the open extremity (12) immersed in the liquid (2) in the container (3) and said pump (10), said measuring device (18) being connected to the said control unit (19) to send the pressure values measured to the latter and the control unit (19) being programmed to convert the said pressure values into a value for the height of the liquid (2) present in the container (3), wherein the delivery conduit comprises an extremity opposite to the open extremity immersed in the liquid and being open to the external environment, said extremity being connected through the user device to a delivery opening (9) for dispensing the liquid.

11. Apparatus according to claim 10, **characterised in that** the open extremity (12) immersed in the liquid (2) in the container is positioned at a predetermined distance (D) from the bottom (15) of the container (3), the dimensional characteristics of the shape of which are known.

12. Apparatus according to claim 11, **characterised in that** the distance D at which the open extremity (12) of the length of conduit (6a) is positioned with respect to the bottom (15) of the container (3) corresponds to a height of liquid in the container which, depending upon the dimensions and shape of the latter, determines a quantity which enables the user device (1) to deliver at least one final dose of beverage containing the liquid in question.

13. An apparatus according to claim 11, wherein the pump (10) is a reversible pump.

## Patentansprüche

1. Verfahren zum Kontrollieren des Vorhandenseins einer Flüssigkeit (2) in einem Behälter, wobei das Verfahren mit einem Behälter (3), der einen Boden (15) aufweist, und mit einer Leitung (6, 6a) zum Fördern der Flüssigkeit versehen ist, wobei diese Leitung (6, 6a) ein in die Flüssigkeit (2) eingetauchtes offenes Ende (12), das sich in der Nähe des Bodens (15) des Behälters (3) befindet, und ein entgegengesetztes Ende aufweist, das zur Umgebung außerhalb des Behälters (3) hin offen ist, wobei die Flüssigkeit (2) mit Hilfe einer Pumpe (10) aus dem Behälter (3) gesaugt wird, die sich in der Förderleitung (6, 6a) befindet und durch eine Steuereinheit (19) gesteuert wird, an die sie angeschlossen ist, **dadurch gekennzeichnet, dass** das zur Umgebung außerhalb des Behälters offene Ende mit einer Benutzervorrichtung (1), welche die Flüssigkeit verwendet, und über die Benutzervorrichtung mit einer Ausgabeöffnung (9) für die Abgabe der Flüssigkeit verbunden ist, und dadurch, dass das Verfahren Folgendes umfasst:
Anhalten der Pumpe und dadurch Schließen der Förderleitung zur Pumpe;
Ansaugen von Luft aus der Umgebung außerhalb des Behälters durch Fördern derselben dahinein für eine Zeit, die ausreicht, um einen sich zwischen der Pumpe (10) und dem in die Flüssigkeit (2) eingetauchten offenen Ende (12) der Leitung erstreckenden Leitungsabschnitt (6a) mit Luft zu füllen;
Messen des statischen Drucks, der sich in diesem Leitungsabschnitt (6a) aufgebaut hat, und
Verarbeiten des in der Leitung detektierten statischen Drucks, um eine Angabe der entsprechenden Piezometerhöhe (H) der in dem Behälter (3) vorhandenen Flüssigkeit (2) bereitzustellen.

2. Verfahren nach Anspruch 1, bei dem vor dem Ansaugen von Luft aus der Umgebung außerhalb des Behälters (3) ein Schritt ausgeführt wird, in dem veranlasst wird, dass die möglicherweise in der Leitung (6, 6a) vorhandene Flüssigkeit (2) zurück in den Behälter (3) fließt.

3. Verfahren nach Anspruch 1, bei dem die Flüssigkeit im Behälter (3) Milch ist.

4. Verfahren nach Anspruch 1, bei dem die Pumpe (10) eine Reversierpumpe ist.

5. Verfahren nach Anspruch 4, bei dem das Ansaugen von Luft aus der Umgebung außerhalb des Behälters für eine Zeit, die ausreicht, um den Leitungsabschnitt (6a) mit Luft zu füllen, das Antreiben der Reversierpumpe für eine Zeit umfasst, die ausreicht, um den Leitungsabschnitt mit Luft zu füllen.

6. Verfahren nach Anspruch 4 oder 5, das ferner nach dem Ansaugen von Luft aus der Umgebung zum Füllen des Leitungsabschnitts und vor dem Messen des statischen Drucks das Anhalten der Pumpe und dadurch das Schließen der Förderleitung zur Pumpe umfasst.

7. Verfahren nach einem der Ansprüche 1 bis 3, bei dem das Ansaugen von Luft aus der Umgebung zum Füllen des Leitungsabschnitts von einer zusätzlichen Pumpe ausgeführt wird, die an den Leitungsabschnitt (6a) angeschlossen ist.

8. Verfahren nach Anspruch 7, das ferner nach dem Ansaugen von Luft aus der Umgebung zum Füllen des Leitungsabschnitts und vor dem Messen des statischen Drucks das Anhalten der zusätzlichen Pumpe umfasst.

9. Verfahren nach einem der Ansprüche 1 bis 8, wobei das Verfahren ein Verfahren zur Kontrolle der Menge einer in einem Behälter gespeicherten Flüssigkeit ist und das Verarbeiten des gemessenen statischen Drucks das Bestimmen der Menge der Flüssigkeit anhand der Angabe der Piezometerhöhe (H) umfasst.

10. Apparat, wobei der Apparat eine Maschine zum Ausgeben von Getränken ist und einen Behälter (3) mit einer Flüssigkeit (2) zur Verwendung mit einer zur Umgebung außerhalb des Behälters (3) offenen Benutzervorrichtung (1), eine Förderleitung (6, 6a), die den Behälter (3) mit der die Flüssigkeit verwendenden Vorrichtung (1) verbindet, wobei diese Leitung (6, 6a) ein in die Flüssigkeit (2) eingetauchtes offenes Ende (12) aufweist, das sich in der Nähe des Bodens (15) des Behälters (3) befindet, und ihr entgegengesetztes Ende mit der die Flüssigkeit verwendenden Vorrichtung (1) verbunden ist, eine Pumpe (10), die sich in der Förderleitung (6) befindet, und eine Steuereinheit (19) zum Steuern des Betriebs der Pumpe (10), an die sie angeschlossen ist, umfasst, wobei der Apparat eine Druckmesseinrichtung (18) in der Leitung umfasst, die in dem Abschnitt (6a) derselben zwischen dem offenen Ende (12), das in die Flüssigkeit (2) in dem Behälter (3) eingetaucht ist, und der Pumpe (10) angeordnet ist, wobei diese Messeinrichtung (18) mit der Steuereinheit (19) verbunden ist, um die gemessenen Druckwerte an letztere zu senden, und die Steuereinheit (19) programmiert ist, um diese Druckwerte in einen Wert für die Höhe der in dem Behälter (3) befindlichen Flüssigkeit (2) umzuwandeln, wobei die Förderleitung ein Ende umfasst, das dem in die Flüssigkeit eingetauchten Ende entgegengesetzt ist und zur Außenumgebung hin offen ist, wobei dieses Ende über die Benutzervorrichtung mit einer Ausgabeöffnung (9) für die Abgabe der Flüssigkeit verbunden ist.

11. Apparat nach Anspruch 10, **dadurch gekennzeichnet, dass** das in die Flüssigkeit (2) in dem Behälter eingetauchte offene Ende (12) in einem vorbestimmten Abstand (D) vom Boden (15) des Behälters (3) angeordnet ist, wobei die Abmessungseigenschaften von dessen Form bekannt sind.

12. Apparat nach Anspruch 11, **dadurch gekennzeichnet, dass** der Abstand D, in dem das offene Ende (12) des Leitungsabschnitts (6a) zum Boden (15) des Behälters (3) angeordnet ist, einer Flüssigkeitshöhe in dem Behälter entspricht, die in Abhängigkeit von den Abmessungen und der Form des Letzteren eine Menge bestimmt, die es der Benutzervorrichtung (1) ermöglicht, zumindest eine letzte Getränkeportion auszugeben, welche die betreffende Flüssigkeit enthält.

13. Apparat nach Anspruch 11, bei dem die Pumpe (10) eine Reversierpumpe ist.

## Revendications

1. Procédé pour contrôler la présence d'un liquide (2) à l'intérieur d'un récipient, le procédé étant prédisposé avec un récipient (3) ayant un fond (15) et avec un conduit (6, 6a) pour la distribution du liquide, ledit conduit (6, 6a) ayant une extrémité ouverte (12) immergée dans le liquide (2), située près du fond (15) du récipient (3), et une extrémité opposée qui est ouverte sur l'environnement à l'extérieur du récipient (3), dans lequel le liquide (2) est aspiré hors du récipient (3) au moyen d'une pompe (10) située dans ledit conduit de distribution (6, 6a) et commandée par le biais d'une unité de commande (19) à laquelle elle est connectée, **caractérisé en ce que** l'extrémité ouverte sur l'environnement à l'extérieur du récipient est reliée à un dispositif utilisateur (1) utilisant le liquide et, à travers le dispositif utilisateur, à une ouverture de distribution (9) pour distribuer le liquide et **en ce que** le procédé comprend :
l'arrêt de la pompe en fermant ainsi le conduit de distribution au niveau de la pompe ;
l'aspiration d'air de l'environnement à l'extérieur du récipient en le distribuant dans celui-ci pendant un temps suffisant pour remplir avec de l'air une longueur de conduit (6a) s'étendant entre la pompe (10) et l'extrémité ouverte (12) du conduit immergée dans le liquide (2) ;
la mesure de la pression statique établie à l'intérieur de ladite longueur de conduit (6a), et
le traitement de la pression statique détectée dans le conduit de manière à fournir une indication de la hauteur piézométrique correspondante (H) du liquide (2) présent dans le récipient (3).

2. Procédé selon la revendication 1, dans lequel, avant l'aspiration d'air de l'environnement à l'extérieur du récipient (3), une étape est effectuée dans laquelle le liquide (2) éventuellement présent dans le conduit (6, 6a) est forcé à s'écouler en retour dans le récipient (3) .

3. Procédé selon la revendication 1, dans lequel le liquide à l'intérieur du récipient (3) est du lait.

4. Procédé selon la revendication 1, dans lequel la pompe (10) est une pompe réversible.

5. Procédé selon la revendication 4, dans lequel l'aspiration d'air de l'environnement à l'extérieur du récipient pendant un temps suffisant pour remplir d'air la longueur de conduit (6a) comprend le commande de la pompe réversible pendant un temps suffisant pour remplir d'air la longueur du conduit.

6. Procédé selon les revendications 4 ou 5, comprenant en outre, après l'aspiration d'air de l'environnement de manière à remplir la longueur du conduit et avant la mesure de la pression statique, l'arrêt de la pompe en fermant ainsi le conduit de distribution au niveau de la pompe.

7. Procédé selon l'une quelconque des revendications 1 à 3, dans lequel l'aspiration d'air de l'environnement de manière à remplir la longueur du conduit est exécutée par une pompe additionnelle reliée à la longueur du conduit (6a).

8. Procédé selon la revendication 7, comprenant en outre, après l'aspiration d'air de l'environnement de manière à remplir la longueur du conduit et avant la mesure de la pression statique, l'arrêt de la pompe additionnelle.

9. Procédé selon l'une quelconque des revendications 1 à 8, dans lequel le procédé est un procédé pour contrôler la quantité d'un liquide stocké à l'intérieur d'un récipient et le traitement de la pression statique mesurée comprend la détermination de la quantité du liquide à partir de l'indication de la hauteur piézométrique (H).

10. Dispositif, le dispositif étant une machine pour distribuer des boissons et comprenant un récipient (3) avec un liquide (2) pour l'utilisation avec un dispositif utilisateur (1) qui est ouvert sur l'environnement à l'extérieur du récipient (3), un conduit de distribution (6, 6a) connectant ledit récipient (3) audit dispositif (1) utilisant le liquide, ledit conduit (6, 6a) ayant une extrémité ouverte (12) immergée dans le liquide (2), située près du fond (15) du récipient (3), et son extrémité opposée reliée audit dispositif (1) utilisant le liquide, une pompe (10) située dans ledit conduit de distribution (6), une unité de commande (19) pour commander le fonctionnement de la pompe (10) à laquelle elle est connectée, dans lequel le dispositif comprend un dispositif de mesure de pression (18) dans le conduit situé dans la longueur (6a) de celui-ci entre l'extrémité ouverte (12) immergée dans le liquide (2) dans le récipient (3) et ladite pompe (10), ledit dispositif de mesure (18) étant connecté à ladite unité de commande (19) pour transmettre les valeurs de pression mesurées à cette dernière et l'unité de commande (19) étant programmée pour convertir lesdites valeurs de pression en une valeur pour la hauteur du liquide (2) présent dans le récipient (3), dans lequel le conduit de distribution comprend une extrémité opposée à l'extrémité ouverte immergée dans le liquide et étant ouverte sur l'environnement externe, ladite extrémité étant reliée à travers le dispositif utilisateur à une ouverture de distribution (9) pour distribuer le liquide.

11. Dispositif selon la revendication 10, **caractérisé en ce que** l'extrémité ouverte (12) immergée dans le liquide (2) dans le récipient est positionnée à une distance prédéterminée (D) du fond (15) du récipient (3), dont les caractéristiques dimensionnelles de la forme sont connues.

12. Dispositif selon la revendication 11, **caractérisé en ce que** la distance D à laquelle l'extrémité ouverte (12) de la longueur de conduit (6a) est positionnée par rapport au fond (15) du récipient (3) correspond à la hauteur de liquide dans le récipient qui, en fonction des dimensions et de la forme de ce dernier, détermine une quantité qui permet au dispositif utilisateur (1) de distribuer au moins une dose finale de boisson contenant le liquide en question.

13. Dispositif selon la revendication 11, dans lequel la pompe (10) est une pompe réversible.
